# EUROPÄISCHE PATENTSCHRIFT

(11) **EP 0 611 276 B1**
(45) Veröffentlichungstag und Bekanntmachung des Hinweises auf die Patenterteilung: **21.05.1997**
(21) Anmeldenummer: 94890026.1
(22) Anmeldetag: 02.02.1994
(51) Int. Cl.: F16L 47/00

(54) **Verbindungsstück zum Anschluss einer metallischen Armatur an ein Kunststoff-Leitungsrohr für flüssige Medien**
Connecting element for joining a metal fitting to a plastic pipe that transports liquid products
Pièce de connexion pour raccorder une armature métallique à un tuyau en plastique transportant des produits liquides

(30) Priorität: 08.02.1993 AT 217/93
(43) Veröffentlichungstag der Anmeldung: 17.08.1994
(73) Patentinhaber: Egger, Karl, A-4203 Altenberg (AT)
(72) Erfinder: Egger, Karl, A-4203 Altenberg (AT)
(74) Vertreter: Hübscher, Heiner, Dipl.-Ing.

(56) Entgegenhaltungen:
- AT-B- 388 605
- CH-A- 506 015
- DE-U- 8 900 879
- GB-A- 2 064 043

## Beschreibung

Die Erfindung bezieht sich auf ein Verbindungsstück zum Anschluß einer metallischen Armatur an ein Kunststoff-Leitungsrohr für flüssige Medien, wobei der unmittelbar mit der Armatur verschraubbare Teil aus einem gegenüber dem mit dem Leitungsrohr verschweißbaren Teil beträchtlich festeren Kunststoff, nämlich aus einem Polymer besteht, das eine im wesentlichen aus Phenylringsystemen, die untereinander durch die Atome bzw. Atomgruppen O, S, CO, SO₂ NH, NHCO und/oder OCO verknüpft sind, zusammengesetzte Struktur aufweist.

Ein derartiges Verbindungsstück ist bereits bekannt (AT-PS 388 605). Schweiß-fähige Kunststoffe sind nicht fest genug, um eine unmittelbare Schraubverbindung zwischen dem Kunststoff-Leitungsrohr und der metallischen Armatur herstellen zu können, weil eine Weitung des aus Kunststoff bestehenden, das Muttergewinde aufweisenden Leitungsstückes auftritt, so daß die Dichtheit der Verbindung nicht mehr gewährleistet ist, wobei außerdem die Festigkeit des Kunststoffes durch die im Gewinde auftretende Kerbwirkung wesentlich herabgesetzt wird. Daher wurde bereits eine Kunststoffmuffe od.dgl., die einerseits mit dem Kunststoff-Leitungsrohr verschweißbar ist und anderseits eine Gewindebüchse zum Einschrauben der Armatur eingespritzt hat, vorgeschlagen, wobei die Gewindebüchse im Spritzgußverfahren aus einem Polymer hergestellt wurde, dessen Phenylringsysteme untereinander durch die oben genannten Atome bzw. Atomgruppen verknüpft sind. Dieses Verbindungsstück hat sich zwar bewährt, kann aber noch nicht voll befriedigen, weil beim Ein- bzw. Ausschrauben der metallischen Armatur, besonders nach längerem Betrieb, häufig ein starkes Drehmoment aufgebracht werden muß, das dann doch zu einer Beschädigung, insbesondere Undichtheit, des aus dem schweißfähigen weicheren Kunststoff bestehenden, die äußere Form des Verbindungsstückes bildenden Hauptteiles führt.

Somit liegt der Erfindung die Aufgabe zugrunde, auch diesen Mangel zu beseitigen und das eingangs geschilderte Verbindungsstück so zu verbessern, daß bei der Montage bzw. Demontage keinerlei Beschädigung mehr zu befürchten ist.

Die Erfindung löst die gestellte Aufgabe dadurch, daß der die äußere Form des Verbindungsstückes bestimmende und das Gewinde für die Armatur aufweisende Hauptteil des Verbindungsstückes aus dem festeren Kunststoff besteht und nur für die Schweißverbindung mit dem Leitungsrohr mit einer Muffe aus dem weniger festen Werkstoff, z.B. einem Polyolefin, versehen ist.

Da nun der Hauptteil des Verbindungsstückes und damit auch sein Gewindeteil für die Armatur aus dem festeren Kunststoff besteht, kann das Drehmoment beim Ein- und insbesondere Ausschrauben der Armatur keinen schädlichen Einfluß mehr ausüben, d.h. es ist an diesen Schraubverbindungsstellen die Dichtheit gewährleistet. Anderseits läßt sich das Kunststoff-Leitungsrohr ohne weiteres an dem Verbindungsstück befestigen. da letzteres ja die Muffe aus dem Polyolefin, insbesondere Polypropylen, eingesetzt hat, die sich mit dem Kunststoff-Leitungsrohr ohne weiteres verschweißen läßt. Die Verbindung des Leitungsrohres mit dem Hauptteil des Verbindungsstückes ist bei der Montage bzw. Demontage durch kein Drehmoment belastet. so daß die durch die Schweißung erreichte Verbindung bzw. deren Dichtheit nicht gefährdet ist.

Um das Verbindungsstück mit den Muffen für das Leitungsrohr versehen zu können und dabei ausreichende Dichtheit zu erzielen, ist in weiterer Ausbildung der Erfindung der aus dem festeren Kunststoff bestehende Hauptteil des Verbindungsstückes zur Bildung einer Labyrinthdichtung an seiner Innenfläche profiliert und die Muffe ist in den Hauptteil eingespritzt oder von diesem umspritzt.

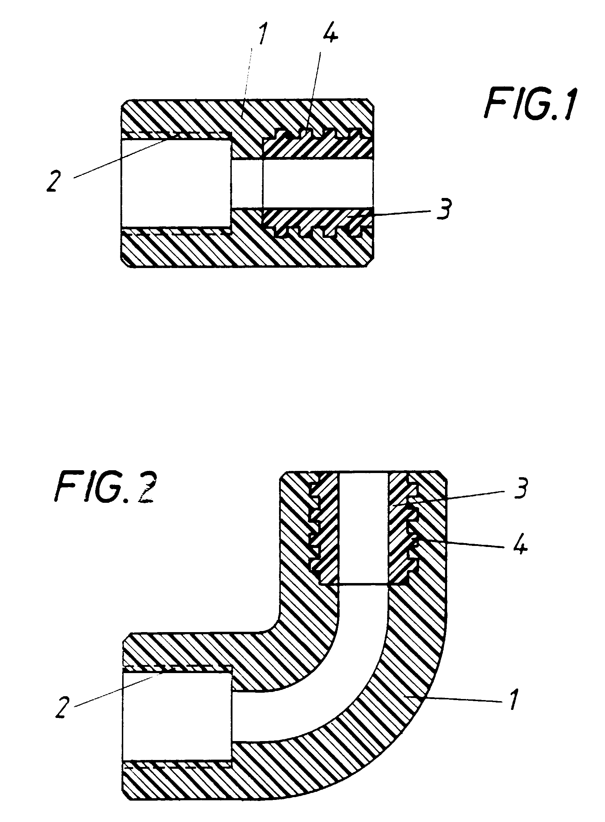

In der Zeichnung ist der Erfindungsgegenstand in zwei Ausführungsbeispielen schematisch dargestellt, und zwar zeigen
Fig. 1 ein Verbindungsstück in einfacher Muffenform und
Fig. 2 ein Verbindungsstück in Knieform jeweils im Schnitt.

Das Verbindungsstück weist einen seine äußere Form bestimmenden Hauptteil 1 auf, der aus einem festen Kunststoff, und zwar einem Polymer, das eine im wesentlichen aus Phenylringsystemen, die untereinander durch die Atome bzw. Atomgruppen O, S, CO, SO₂, NH, NHCO und/oder OCO verknüpft sind, zusammengesetzte Struktur besitzt. Zur Aufnahme einer anzuschließenden Metallarmatur weist der Hauptteil 1 ein entsprechendes Gewinde 2 auf. Um anderseits ein Kunststoff-Leitungsrohr für flüssige Medien aufnehmen bzw. einschweißen zu können, ist der Hauptteil 1 mit einer Muffe 3 versehen, die aus einem Polyolefin, insbesndere Polypropylen, besteht. Die Muffe 3 wird in den Hauptteil 1 des Verbindungsstückes eingespritzt.

Um völlige Dichtheit zwischen der Muffe 3 und dem Hauptteil 1 zu erzielen, ist der Hauptteil 1 an der entsprechenden Stelle an der Innenseite bei 4 profiliert, so daß eine Labyrinthdichtung entsteht. Es ist selbstverständlich, daß das Leitungsrohr in die Muffe 3 eingebracht und mit ihr verschweißt wird.

## Patentansprüche

1. Verbindungsstück zum Anschluß einer metallischen Armatur an ein Kunststoff-Leitungsrohr für flüssige Medien, wobei der unmittelbar mit der Armatur verschraubbare Teil aus einem gegenüber dem mit dem Leitungsrohr verschweißbaren Teil beträchtlich festeren Kunststoff, nämlich aus einem Polymer besteht, das eine im wesentlichen aus Phenylringsystemen, die untereinander durch die Atome bzw. Atomgruppen O, S, CO, SO₂, NH, NHCO und/oder OCO verknüpft sind, zusammengesetzte Struktur aufweist, dadurch gekennzeichnet, daß der die äußere Form des Verbindungsstückes bestimmende und das Gewinde (2) für die Armatur aufweisende Hauptteil (1) des Verbindungsstückes aus dem festeren Kunststoff besteht und nur für die Schweißverbindung mit dem Leitungsrohr mit einer Muffe (3) aus dem weniger festen Werkstoff, z.B. einem Polyolefin, versehen ist.

2. Verbindungsstück nach Anspruch 1, dadurch gekennzeichnet, daß der aus dem festeren Kunststoff bestehende, die Muffe (3) aufnehmende Hauptteil (1) des Verbindungsstückes zur Bildung einer Labyrinthdichtung an seiner Innen- oder Außenfläche profiliert ist (bei 4) und die Muffe (3) in dem Hauptteil (1) eingespritzt oder von diesem umspritzt ist.

## Claims

1. A connecting member for connecting a metal fitting to a plastic pipe for liquid media, wherein the part for directly screwing to the fitting is made of a plastic considerably stronger than the part for welding to the pipe, i.e. a polymer having a structure substantially made up of phenyl ring systems linked by the following atoms or groups of atoms: O, S, CO, SO₂, NH, NHCO and/or OCO, characterised in that the main part (1) of the connecting member, which determines the outer shape thereof and comprises the thread (2) for the fitting, is made of the stronger plastic and only has a sleeve (3) made of the weaker material, e.g. a polyolefin, for the welded connection to the pipe.

2. A connecting member according to claim 1, characterised in that the main part (1) of the connecting member made of the stronger plastic and receiving the sleeve (3) is given a profiled inner or outer surface (at 4) to form a labyrinth seal, and the seal is injection-moulded or embedded in the main part (1).

## Revendications

1. Pièce de connexion pour raccorder une armature métallique à un tuyau en matière plastique transportant des produits liquides, la partie vissable directement à l'armature étant constituée d'une matière plastique considérablement plus rigide que la partie soudable au tuyau, précisément en un polymère qui présente une structure composée essentiellement de systèmes à anneaux phényl, combinés entre eux par les atomes ou les groupes d'atomes O, S, CO, SO₂, NH, NHCO et/ou OCO, caractérisée en ce que la partie principale (1) déterminant la forme extérieure de la pièce de connexion et présentant le filetage (2) destiné à l'armature, de la pièce de connexion est constituée de la matière plastique plus rigide et n'est pourvue, que pour la liaison vissée au tuyau, d'un manchon (3) réalisé à partir du matériau moins rigide, par exemple une polyoléfine.

2. Pièce de connexion selon la revendication 1, caractérisée en ce que la partie principale (1), constituée de la matière plastique plus rigide et recevant le manchon (3), de la pièce de connexion, est profilée sur sa surface intérieure ou extérieure (en 4) pour constituer un joint d'étanchéité labyrinthe et le manchon (3) étant réalisé dans la partie principale (1) par injection ou bien étant surmoulé par injection, par celle-ci.
